Europäisches Patentamt

European Patent Office

Office européen des brevets

(11) Publication number: **0 329 869 B1**

(12) **EUROPEAN PATENT SPECIFICATION**

(45) Date of publication of patent specification: **29.07.92**   (51) Int. Cl.5: **F16B 19/10, E04D 1/34**

(21) Application number: **88301499.5**

(22) Date of filing: **22.02.88**

(54) **A rivet and a roofing structure utilizing same.**

(43) Date of publication of application:
**30.08.89 Bulletin 89/35**

(45) Publication of the grant of the patent:
**29.07.92 Bulletin 92/31**

(84) Designated Contracting States:
**AT BE CH DE ES FR GB GR IT LI LU NL SE**

(56) References cited:
**DE-A- 2 334 385**
**US-A- 3 192 821**
**US-A- 3 515 028**
**US-A- 4 388 031**

(73) Proprietor: **ENGINEERED CONSTRUCTION COMPONENTS (AMERICA) INC.**
**Bank of America Building 50th Street**
**Panama(PA)**

(72) Inventor: **Murphy, Colin R. R.**
**Bank of America Building 50th Street**
**Panama(PA)**

(74) Representative: **Hackett, Sean James et al**
**Marks & Clerk 57-60 Lincoln's Inn Fields**
**London WC2A 3LS(GB)**

Rank Xerox (UK) Business Services

## Description

This invention relates to a rivet, and more particularly to a combination of a rivet and mandrel. Still more particularly, this invention relates to a combination of a rivet and mandrel which is particularly suited for roofing.

Rivets are generally known in the art, and such rivets are generally comprised of a rivet and mandrel which are employed in combination with a riveting tool for securing the rivet.

In general, when employing a rivet for fastening, it is necessary to predrill a hole for inserting the combination of rivet and mandrel into both the material which is to be fastened and the substrate to which the material is to be attached. This generally required precise drilling of a hole so as to permit proper fastening.

In addition, in general, previous rivets were limited in length, with such rivets generally having a length of no greater than about two inches.

Furthermore, the strength of rivets was generally limited, whereby the rivets could not be employed for certain fastenings which require increased strength.

US patent specification no 4 388 031 relates to a blind fastener device having a main rivet body formed with a series of spaced apart slots extending axially (prior to fastening) from one end forming bendable sectors. A pin having an enlarged head at one end is provided for passing through the main rivet body. A sleeve surrounds the pin at the head end thereof. When the pin is drawn through the main rivet body, the head presses the sleeve against these sectors so as to bend them to a radial position with respect to the axis of the pin.

The present invention is directed to providing an improved combination of rivet and mandrel, as well as an improved mandrel for a rivet.

In accordance with the present invention, there is provided a rivet mandrel for a rivet and rivet mandrel combination,

the rivet mandrel including a first portion for insertion into a riveting tool and a second opposite end portion having an enlarged head terminating in a point for piercing a substrate and assisting insertion of the rivet mandrel into a substrate, characterised in that cutting means is provided on the side of the enlarged head opposite from the point for cutting a rivet into separate portions and for curling the separate portions back on the rivet.

Optional but preferred features of the invention are defined in the dependent claims appended hereto.

On advantage of the present invention is that the rivet may be of an increased length.

Embodiments of the invention may be used in roofing structures for fastening a roofing substrate to a roof deck. In cases where the roof deck is thick relative to the rivet, the cut and peeled back portion of the rivet may not completely pierce the roof deck, the cut and peeled back portion being embedded within the roof deck. On the other hand, in cases where the roof deck is thin relative to the rivet, the cut and peeled back portion of the rivet may completely pierce and press against the side of the roof deck opposite from the roofing substrate.

The invention will be further described with respect to the accompanying drawings, wherein:

Fig. 1 of the drawings illustrates a preferred embodiment of a combination of a rivet and mandrel in accordance with the present invention;

Fig. 2 of the drawings illustrates the combination of Figure 1, wherein the mandrel has peeled back the rivet body;

Fig. 3 is a side elevation of the rivet mandrel;

Fig. 4 is an end-view of the left end of the rivet mandrel of Figure 3.

Fig. 5 is a cut-away side view of a rivet in accordance with the present invention inserted into a roof deck without piercing entirely through the roof deck.

Fig. 6 is a cut-away side view of a rivet in accordance with the present invention inserted entirely through the roof deck.

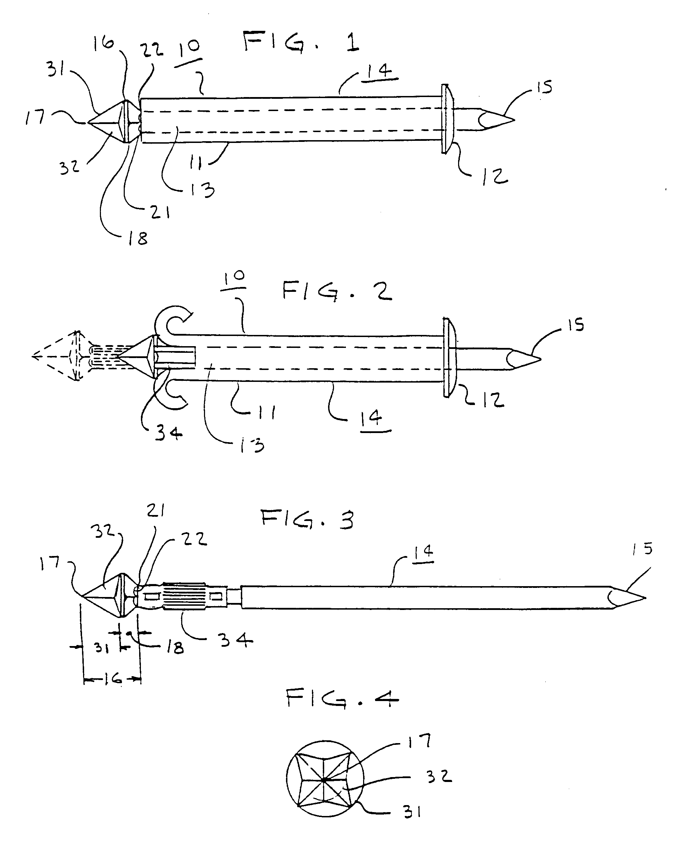

Referring now to Fig. 1 of the drawings, there is shown a rivet, generally designated as 10, which is comprised of a cylindrical main body portion 11, and a head portion 12. The rivet 10 is provided with a central bore 13 which receives a rivet mandrel, generally indicated as 14. The rivet mandrel has an essentially cylindrical shape, and terminates in a first end portion 15, which is adapted to be received in a riveting tool. The end of the rivet mandrel 14 opposite to end 15 is comprised of an enlarged head portion, generally designated as 16 which is exterior to and adjacent to the end of rivet 10, which is opposite the rivet head portion 12.

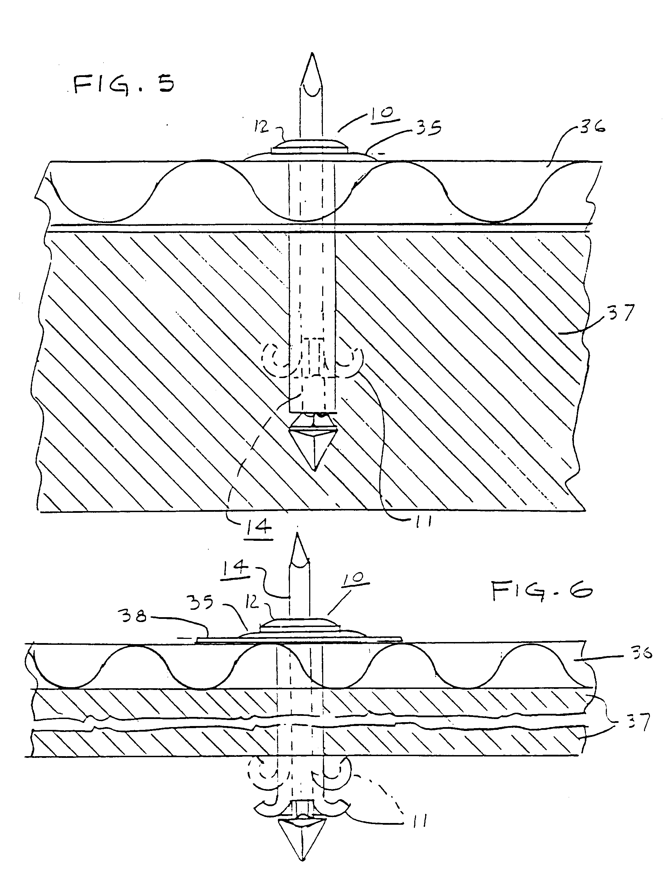

Referring now also to Fig. 3 of the drawings, the head portion 16 of the mandrel includes a self-piercing end portion 31 which terminates in a self-piercing point 17, and further includes cutting portion 18 which functions to cut and peel back the rivet body into separate portions which curls back on the rivet body.

As particularly shown, the cutting portion 18 is comprised of cutting points 21 which are circumferentially spaced from each other, and surfaces 22, positioned between the cutting points, and which extend angularly outwardly from the main body portion of the rivet mandrel 14. Upon pulling of the mandrel 14 back through the bore 13 of the rivet 10, the cutting points 21 cut the rivet body 11 into separate sections, and surfaces 22 cause the rivet body portion to peel and curl back onto the rivet body (see Fig. 2).

As hereinabove indicated, the head portion 16 of the rivet mandrel 14 also includes a self-piercing portion, generally designated as 31 (Figs. 1 and 4), with the self-piercing portion 31 being comprised of self-piercing point 17 and undercut surfaces 32, which extend angularly outwardly from the point 17, and which form circumferentially spaced stabilizing surfaces 32. The surfaces 32 slope at an angle of approximately 30 degrees with respect to the horizontal, and the surfaces 21 slope in an opposite direction, at an angle with respect to the horizontal of about 60 degrees. The four fins 32, which are spaced from each other by approximately 90 degrees.

The body portion 14 of the mandrel further includes a plurality of longitudinal grooves 34 (Figs. 2 and 3, adjacent to the head portion 16, which grooves 34 function to score the interior of the rivet to facilitate cutting thereof into separate sections by cutting points 21. The longitudinal grooves 34, as well as scoring the inside of the rivet 10 act as a vibration-resistant mechanism to insure the mandrel head 16 does not come out once the rivet is in place.

As shown in Figs. 1 and 2 of the drawings, the mandrel 14 is positioned in the rivet 10 with head portion 15 thereof extending out of the main body portion 11 of the rivet 10, with the cutting points 21 of the head 16 being contiguous with the surface of the rivet.

In operation, on pulling of the mandrel 14 through the bore 13 of rivet 10, the cutting points 21 cut the rivet body into separate portions, and the surfaces 22 spread the cut portions outwardly away from the mandrel 14, and cause the cut portions to curl back against the rivet body to thereby increase the strength of the rivet.

The rivet of the present invention, may be formed in lengths longer than those previously used in the art. Thus, for example, in general, rivets generally have a length which is not in excess of two inches. In accordance with the present invention, it is possible to provide rivets having lengths in excess of two inches, preferably in excess of three inches, and up to about 19 mm (9/12 inches), and even greater.

The rivet is particularly useful for connecting a wide variety of materials, and has particular application to fastening of roofing substrates, such as insulation and/or roof membranes to roof decks during the installation of roofs. Thus, for example, the rivet may be employed for attaching roof insulation and/or roof membranes to lightweight, metal and wood roof decks. Lightweight decks can be Tectum, Permadeck or Martins Fireproofing cementitious wood fiber decks between 50 mm and 125 mm (2" and 5") thick. Metal decks can be 18 gauge to 28 gauge corrugated metal decks. Wood decks can be 12.5 to 25 mm (1/2" to 1") plywood or wood plank 19 to 25 mm (3/4" to 1") thick. Lightweight decks can also include poured or plank gypsum as well as lightweight concrete fill over a metal pan. The peel rivet will work in all of them.

In addition, the combination of rivet and mandrel in accordance with the present invention can be used even if the rivet and mandrel do not completely pierce through the materials which are to be attached to each other. Thus, in accordance with the present invention, upon drawing of the mandrel through the rivet, the rivet will peel back, and form a fastener of increased strength, even if the rivet has not completely pierced through all of the materials. For example, the rivet body will open inside a lightweight roof deck without piercing completely through the roof deck. The four sections of the rivet body will open; however, the density of the roof deck will determine how effective the tensile pull-out is.

Referring to Figs. 5 and 6, there is illustrated an arrangement wherein the rivet 10 is inserted in a roof substrate overlying a roof deck 37 and into the roof deck 37 without completely piercing through the roof deck 37. The roof substrate comprises insulation 36 and/or a roof membrane 38. As further shown in Figure 5, the rivet 10 and mandrel 14 are inserted through a stress plate 35 which lies on top of insulation 36 and are driven through the same into the roof deck 37. Alternatively the roofing structure may have a roof membrane 38 overlying the insulation 36 as shown in Fig. 6. The stress plate 35 in this embodiment rests upon the membrane 38. In some cases, the membrane 38 may overlie the roof deck 37 in the absence of insulation 36. Shown in phantom is the peeling back of the rivet body 11 after the rivet 10 is inserted into or through the roof deck 37.

The rivet will be installed with a special installation tool holding a stack of stress plates and rivets on a plastic banding. The rivets would automatically index over the stress plate. The tool will push the rivet 10 through the stress plate 35, pulling it out of the holder and therein driving the rivet 10 and mandrel 14 through the insulation 36 and the material of the deck 37. In some cases (higher density decks), the rivet 10 may not penetrate the deck 37 totally and can open inside the material of the deck 37.

As described hereinbefore, the mandrel 14 is contained in the bore 13 of the rivet 10, and the head 16 of the mandrel extends outwardly from the bottom end of the rivet 10. The rivet 10 and mandrel 14 assembly are thus inserted through an opening in the stress plate 35. The self-piercing point 17 of the head 16 of the mandrel 14 pierces through the insulation 36 and/or the membrane 38 and then travels into the roof deck 37 but does not completely pierce through the roof deck 37. Thus, the mandrel 14 of which is connected in the bore 13 of the rivet 10 has inserted the rivet 10 into the roof deck 37. The head portion 12 of the rivet 10 rests on top of the stress plate 35.

Once in place, the mandrel 14 is pulled to peel the rivet back. The cutting points 21 of cutting portion 18 of the mandrel begin to cut the body 11 of the rivet 10 and peel back the rivet into the portions which curl back on the rivet body 11. This peeling process is done inside the roof deck 37. Once enough resistance has been put on the mandrel, it will break at the designated break point. The top of the mandrel will be pulled by air pressure into a holding chamber. The rivet 10 and mandrel 14 thus serve as a fastener for fastening a substrate to a roof deck 37.

Fig. 6 is a drawing wherein the rivet 10 and mandrel 14 have been inserted into the roof substrate and the rivet 10 and mandrel 14 have completely pierced through the roofing substrate. The insertion process is the same as described above except that the self-piercing portion 17 and head 16 of the mandrel 14, and the rivet 10 have pierced entirely through the roof deck 37. The cutting points 21 of the cutting portion 18 of the mandrel 14 then peel back the body 11 of the rivet 10 into portions that curl back upon the rivet body 11 as well as about upon the undersurface of the roof deck 37.

## Claims

1.  A rivet mandrel (14) for a rivet and rivet mandrel combination,
    the rivet mandrel (14) including a first portion (15) for insertion into a riveting tool and a second opposite end portion (31) having an enlarged head (16) terminating in a point (17) for piercing a substrate and assisting insertion of the rivet mandrel into a substrate, characterised in that cutting means (18) is provided on the side of the enlarged head (16) opposite from the point (17) for cutting a rivet into separate portions (11) and for curling the separate portions (11) back on the rivet.

2.  A rivet mandrel according to claim 1, wherein said enlarged head (32) includes a tapered section terminating in said point.

3.  A rivet mandrel according to claim 2, wherein said tapered section includes means (32) for preventing rotation and bending of said rivet mandrel relative to the rivet (10) upon piercing of a substrate.

4.  A rivet mandrel according to claim 3, wherein said means (32) for preventing rotation and bending of said mandrel upon piercing of the substrate comprise circumferentially spaced stabilizing fins extending angularly outwardly from said point (17).

5.  A rivet mandrel according to any one of the preceding claims, wherein said cutting means (18) for cutting the portion (12) of the main body (11) into separate portions which curl back on the rivet body comprises:
    at least two cutting points (21) for cutting said rivet body into separate sections, and
    a plurality of surfaces for causing the rivet body portion to peel and curl back onto the rivet body.

6.  A rivet mandrel according to any one of the preceding claims, wherein said rivet has a length in excess of 50 mm (2 inches).

7.  A rivet mandrel according to any one of the preceding claims, wherein the rivet mandrel comprises a body portion (14) and the main body (11) of the rivet (10) is generally hollow, the body portion (14) having longitudinally extending grooves (34) for scoring the interior of the main body (11) for assisting cutting thereof by the cutting means (18).

8.  A rivet mandrel according to any one of the preceding claims in combination with a rivet (10), wherein the rivet comprises a body portion (11) and a head portion (12), and the rivet mandrel (14) extends through the rivet (10).

## Revendications

1.  Un mandrin à rivet (14) pour un rivet et une combinaison de mandrin à rivet,
    le mandrin à rivet (14) englobant une première partie (15) destinée à être insérée dans un outil à river et une deuxième partie d'extrémité opposée (31) comportant une tête élargie (16), se terminant en un point (17), destinée à percer un substrat et à faciliter l'insertion du mandrin à rivet dans un substrat, caractérisé en ce qu'un moyen de découpage (18) est agencé sur le côté de la tête élargie (16) opposé au point (17) pour découper un rivet en parties séparées (11) et pour enrouler les parties séparées (11) sur le rivet.

2.  Un mandrin à rivet selon la revendication 1, dans lequel ladite tête élargie (32) englobe une partie effilée se terminant au dit point.

3. Un mandrin à rivet selon la revendication 2, dans lequel ladite partie effilée englobe un moyen (32) permettant d'empêcher une rotation et un pliage du dit mandrin à rivet par rapport au rivet (10) lors du perçage d'un substrat.

4. Un mandrin à rivet selon la revendication 3, dans lequel ledit moyen (32) permettant d'empêcher une rotation et un pliage du dit mandrin lors du perçage du substrat comprend des ailettes de stabilisation espacées circonférentiellement, s'étendant angulairement vers l'extérieur à partir du dit point (17).

5. Un mandrin à rivet selon l'une quelconque des revendications précédentes, dans lequel ledit moyen de découpage (18) servant à découper la partie (12) du corps principal (11) en parties séparées s'enroulant sur le corps du rivet comprend:
au moins deux points de découpage (21) pour dècouper ledit corps du rivet en sections séparées, et
plusieurs surfaces pour entraîner la partie du corps du rivet à se détacher et à s'enrouler sur le corps du rivet.

6. Un mandrin à rivet selon l'une quelconque des revendications précédentes, dans lequel ledit rivet a une longueur en excès de 50 mm (2 pouces).

7. Un mandrin à rivet selon l'une quelconque des revendications précédentes, dans lequel le mandrin à rivet comprend une partie de corps (14), le corps principal (11) du rivet (10) étant généralement creux, la partie du corps (14) comportant des rainures (34) à extension longitudinale pour entailler l'intérieur du corps principal (11) en vue de faciliter son découpage par le moyen de découpage (18).

8. Un mandrin à rivet selon l'une quelconque des revendications précédentes, en combinaison avec un rivet (10), dans lequel le rivet comprend une partie de corps (11) et une partie de tête (12), le mandrin à rivet (14) s'étendant à travers le rivet (10).

**Patentansprüche**

1. Nietdorn (14) für eins Niete/Nietdorn Kombination mit einem ersten Abschnitt (15) zur Einführung in ein Nietwerkzeug und mit einem zweiten entgegengesetzten Endabschnitt (31), der einen vergrößerten Kopf (16) aufweist, welcher zum Durchstoßen eines substrats und zur Erleichterung des Einführens des Nietdorns in ein Substrat in einem Punkt (17) endet, dadurch gekennzeichnet, daß eine Schneideinrichtung (18) auf der dem Punkt (17) entgegengesetzten Seite des vergrößerten Kopfes (16) vorgesehen ist, um eine Niete in einzelne Abschnitte (11) zu zerschneiden und um die einzelnen Abschnitte (11) zurück auf die Niete aufzurollen.

2. Nietdorn nach Anspruch 1, dadurch gekennzeichnet, daß der vergrößerte Kopf (32) einen in dem Punkt endenden spitz zulaufenden Abschnitt aufweist.

3. Nietdorn nach Anspruch 2, dadurch gekennzeichnet, daß der spitz zulaufende Abschnitt Mittel (32) aufweist, um eine Drehung oder Biegung des Nietdorns relativ zu der Niete (10) beim Durchstechen eines Substrats zu verhindern.

4. Nietdorn nach Anspruch 3, dadurch gekennzeichnet, daß die Mittel (32) zum Verhindern einer Drehung oder Biegung des Dorns beim Durchstechen des Substrats auf dem Umfang verteilte Stabilisierrippen aufweisen, die von dem Punkt (17) winklig nach außen verlaufen.

5. Nietdorn nach einem der vorhergehenden Ansprüche, dadurch gekennzeichnet, daß die Schneideinrichtung (18) zum Schneiden des Abschnitts (12) des Hauptkörpers (11) in separate, sich zurück auf den Nietkörper aufrollende Abschnitte mindestens zwei Schneidpunkte (21) zum Schneiden des Nietkörpers in separate Abschnitte und mehrere Flächen aufweist, um zu bewirken, daß sich der Nietkörperainschnitt schält und zurück auf den Nietkörper aufrollt.

6. Nietdorn nach einem der vorhergehenden Ansprüche, dadurch gekennzeichnet, daß die Niete eine Länge von mehr als 50 mm (2 inches) aufweist.

7. Nietdorn nach einem der vorhergehenden Ansprüche, dadurch gekennzeichnet, daß er einen Körperabschnitt (14) aufweist und der Hauptkörper (11) der Niete (10) im wesentlichen hohl ist,
wobei der Körperabschnitt (14) in Längsrichtung verlaufende Nuten (34) zum Einkerben des Inneren des Hauptkörpers (11) aufweist, um dessen Durchschneiden durch die Schneideinrichtung (18) zu unterstützen.

8. Nietdorn nach einem der vorhergehenden Ansprüche in Verbindung mit einer Niete (10), wobei die Niete einen Körperabschnitt (11) und einen Kopfabschnitt (12) aufweist und der Nietdorn (14) durch die Niete (10) verläuft.

FIG. 1

FIG. 2

FIG. 3

FIG. 4

FIG. 5

FIG. 6